# EUROPEAN PATENT APPLICATION

(11) **EP 2 491 889 A2**
(43) Date of publication of application: **29.08.2012**
(21) Application number: 12155578.3
(22) Date of filing: 15.02.2012
(51) Int. Cl.: A61C 19/00

(54) **A dental instrument**

(30) Priority: 24.02.2011 DK 201100129
(71) Applicant: CMS Dental ApS, 2100 Copenhagen Ø (DK)
(72) Inventor: Kert, Jimmie, 2100 Copenhagen Ø (DK)
(74) Representative: Nordic Patent Service A/S

(57) **Abstract**

The invention relates to a dental instrument (1) comprising a housing having a first part (10) with a circumferential wall (12) and defining a hand-piece for holding, preferably by a single hand, said instrument (1), a light source (5), electrical components (2) for operating said light source (5) being lodged within said housing, and a tip portion (9) configured to support a light guide (40) having a proximal end (42) receiving light from said light source (5), characterised in said housing having between said first part (10) and said tip portion (9) a second part (20) with a circumferential wall (22) having on a first side (A) of said instrument (1) a first control element (26) for fingertip operation and on a second side (B) of said instrument (1) a second control element (28) for fingertip operation, said first control element (26) being located circumferentially opposite said second control element (28).

## Description

The present invention relates to a dental instrument comprising a housing having a first part with a circumferential wall and defining a hand-piece for holding, preferably by a single hand, the instrument, a light source, such as a LED-lamp, and electrical components for operating the light source being lodged within the housing, and a tip portion configured for insertion into a patient's mouth, the tip portion being configured to support a light guide having a proximal end receiving light from the light source. The light source may be one for polymerization of photosetting resins, or it may be one for activating a photosensitizer solution in root canal treatment.

Examples of such an instrument are disclosed in US patent applications no. 2003/0219694 and 2009/0047618. US patent no. 6571049 describes a hand-held dental instrument comprising a light source and a switch which is displaceable axially.

One major concern of dentists is that hand-held instruments of the aforementioned type should be dimensioned to make work within the patient's mouth easy. These concerns apply not only to the parts of the instrument that are inserted into the patient's mouth but also to those parts of the hand-held instrument that are manipulated or held on to by the dentist. This is so because these instruments are typically held by the dentist for a prolonged period of time during the treatment of a patient. The aforementioned publications show instruments that to some degree ease work within the patient's mouth; however, they still to some degree fail in offering easy, convenient and ergonomically desirable properties when it comes to the manipulation of the instrument, including the controlling of the functions of the instrument.

One object of the present invention is to provide for an improved instrument of the kind referred to above. This object is in accordance with the invention met by the housing having between the first part and the tip portion a second part with a circumferential wall having on a first, upper side of the instrument a first control element for fingertip operation and on a second, lower side of the instrument another, second control element also for fingertip operation, the first control element being located circumferentially opposite said second control element. In this manner the control elements may be manipulated by the same finger, such as the thumb or index finger, irrespectively of the instrument being used with tip portion pointing upwards for treatment of teeth in the upper mouth or pointing downwards for treatment of teeth in the lower mouth, i.e. irrespectively of the side of the instrument that faces upwards. The term "control element" as used herein includes i.a. mechanical elements such as a push-button, and a finger-touch sensitive surface, such as integrally moulded softer surface parts of the housing that yield upon depression to touch contacts lodged within the housing. Preferably, the same control element type is used on both sides of the instrument such that the dentist will not sense any difference when using the one or the other control element.

In one embodiment the control element on the one side of the instrument and the control element on the opposite, second side of the instrument performs the same function, such as relating to the switching on and/or off of the light source. This option will be highly appreciated by the dentist when the same operation is performed in the upper and lower mouth of the patient.

By incorporating electrical components carried on a printed circuit board arranged with its major surfaces extending vertically between the first or upper side and the second or lower side of the instrument the second part may have a flat form with a small width convenient for the dentist since this is the part of the instrument that will be between his fingers. Preferably, the printed circuit board has contacts mounted opposite each other at or along edges of the board and being directly activatable by the oppositely arranged control elements.

To further ease work inside the patient's mouth the tubular light guide for emitting light onto the patient's teeth may be hinged to the tip portion on the first side of the instrument, allowing a pivotal movement by manual force of the light guide to adjust the direction of the light without the dentist himself having to hold the instrument in a position that may not be ergonomically convenient.

Further advantages and benefits of the invention will appear in the following description wherein reference is made to an embodiment shown on the drawings wherein
Fig. 1 is a perspective front view of an embodiment of the instrument according to the invention,
Fig. 2 is another perspective view of the instrument of fig. 1, with a light guide mounted thereon,
Fig. 3 illustrates, schematically, a first position of use of the instrument of fig. 2, held with a single hand,
Fig. 4 illustrates, schematically, as second position of use of the instrument of fig. 2, held with a single hand,
Fig. 5 illustrates the instrument of fig. 1 when positioned in a charger for charging a battery inside the instrument,
Fig. 6 is a schematic exploded view showing some of the inside component parts of the instrument,
Fig. 7 and 8 are cross-sectional side views showing the mounting of the light guide, and
Fig. 9a and b schematically show steps in the treatment of a periodontal pocket, as seen from the side of a tooth and from above adjacent teeth.

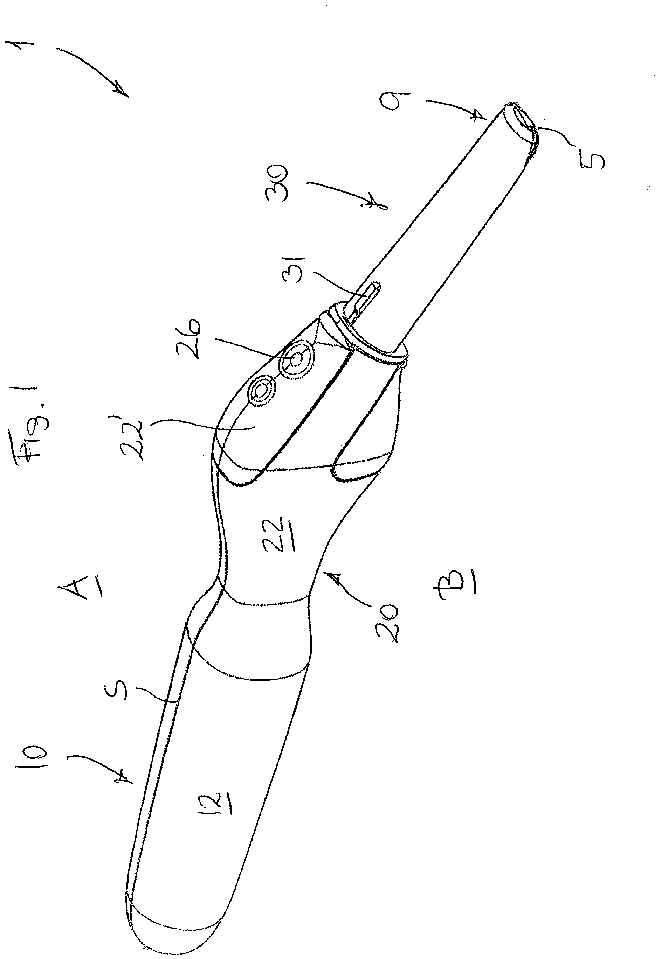

In fig. 1 reference numeral 1 represents a hand-held dental instrument. A first part 10 has a circumferential cylindrical wall 12 and may house a rechargeable battery for operating the instrument. The wall 12 may have any external contour other than cylindrical but suitable for holding in the hand of an operator. Such alternative sectional outline contours could be oval or elliptical, or even similar to a rounded off rectangle. The first part 10 is preferably dimensioned to allow a dentist or operator to hold it in his hand. Integral with the first part 10 is a second part 20 which has a flat form defined by a circumferential wall 22, the flat sides facing right and left, respectively, in use of the instrument 1. A third part 30 defines a tubular extension of the second part 20 and has at the end a tip portion 9 of the instrument. A light source 5 is arranged at the tip portion 9. The first 10, second 20 and third 30 parts define together a housing, which may be of a moulded plastics material, and are preferably configured symmetrically in relation to an upright plane running through line S; letters A and B refer to top and bottom sides of the instrument 1 that in use of the instrument will face upwards or downwards.

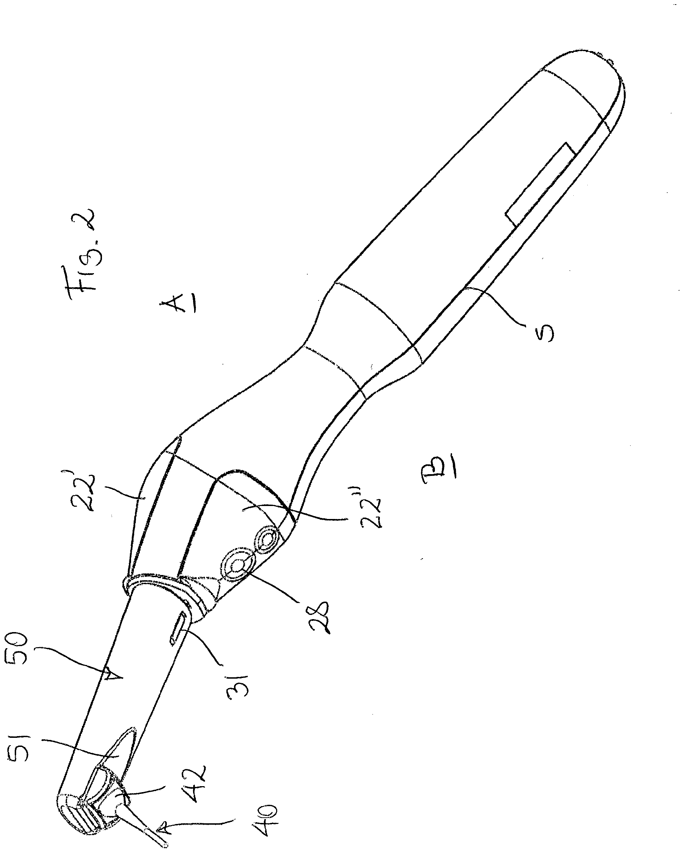

Shown in fig. 1 and 2 are areas or segments 22', 22" of the circumferential wall 22 of the second part 20. The two segments define areas facing away from the instrument 1 in opposite directions, the first segment 22' being on side A while the second segment 22" is on side B of the instrument. Each segment 22', 22" has a respective control element 26, 28 for user control of the operation of the instrument 1, and the control element, or control elements when more than one is arranged, as shown, on one segment 22' is placed in a manner that basically mirrors the arrangement of the control element(s) on the other segment 22", at the same or essentially the same distance from the first part 10. The control elements 26, 28 may be push-buttons, touch sensors, or other input means. In the shown embodiment the push-buttons are covered with a layer of a soft material, preferably integrally moulded with the rest of the housing.

Shown in fig. 2 is also a hollow rigid cylindrical cover 50, preferably of a plastics material, which forms a disposable part of the instrument 1 and which is pushed over the third part 30 before use of the instrument 1. The cover 50 has at its one end slits that receive projections 31 formed on the surface of the third part 30, for releasably securing the cover 50 to the third part 30.

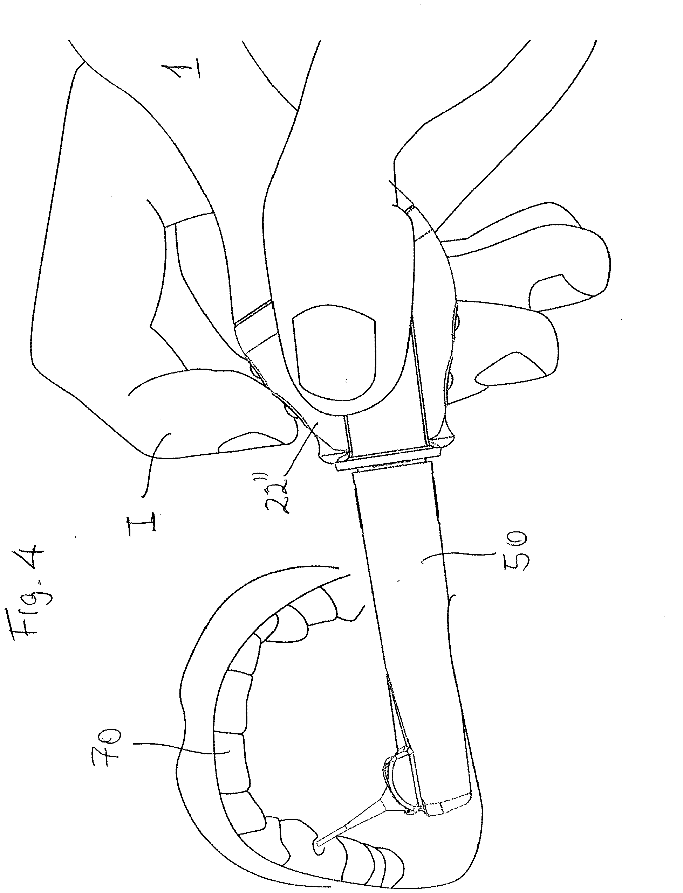

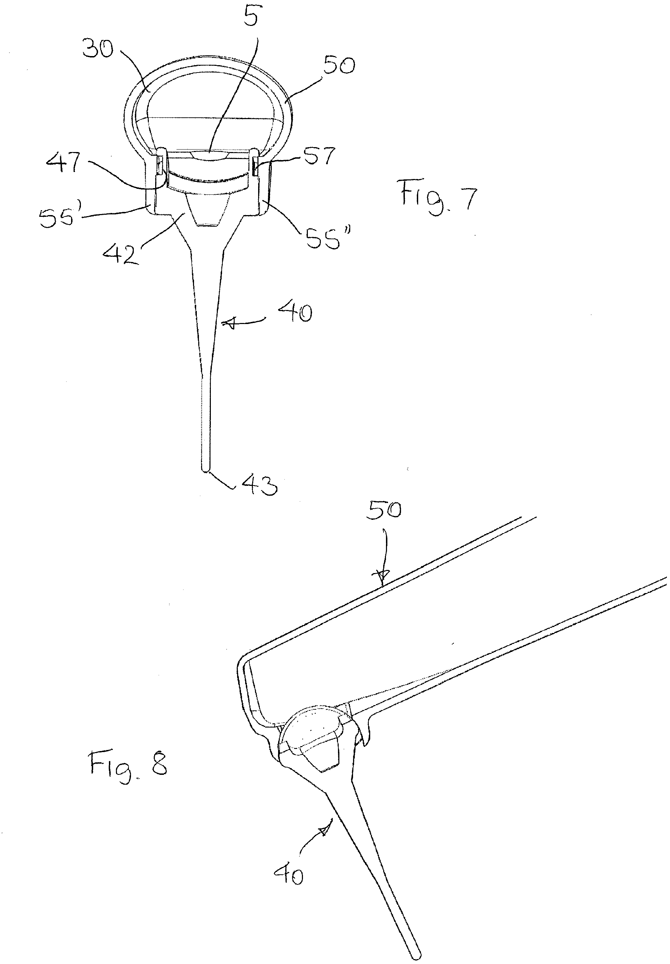

The cover 50 has at its second end an aperture 51 with a mounting structure for mounting, preferably in a pivotal manner, of a light guide 40 which is arranged adjacent the light source 5 to receive light from the light source 5. The tip of the light guide 40 may be configured as shown in fig. 4 or 8 of US patent application no. 2009/0047618 to which reference should be made. The pivotal mounting of the light guide 40 will be discussed herein later; preferably differently configured light guides 40 may be mounted to the cover 50. It is noted that upon mounting of the light guide 40 the aperture 51 may be closed off, restricting or preventing ingress of any fluids into the interior of the cover 50.

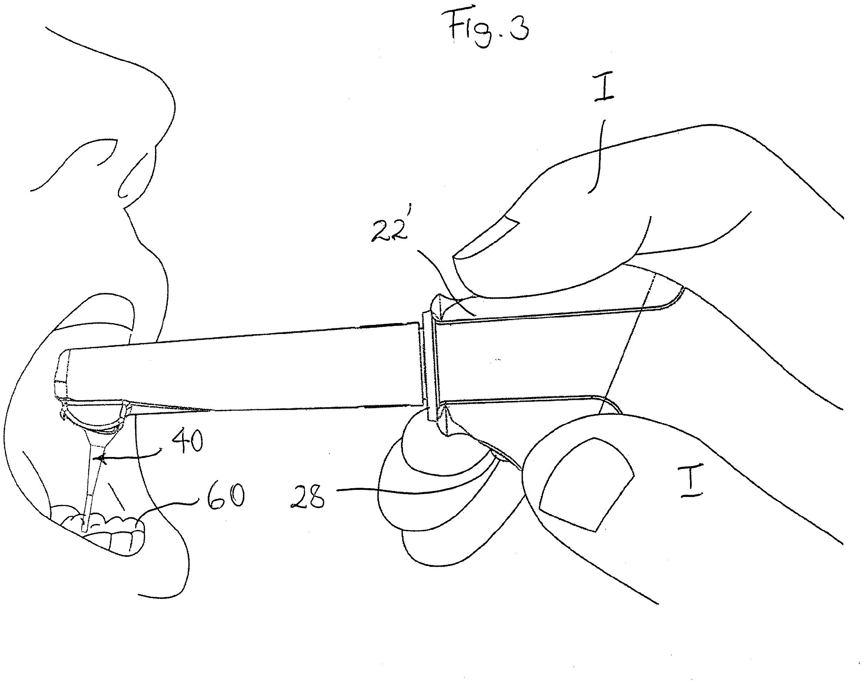

Fig. 3 shows one position of use of the instrument 1 where side A faces upwards and with the light guide 40 pointing downwards, for treating teeth in the lower mouth part of a patient with the tip portion 9 inserted into the patient's mouth. As shown, the dentist will hold securely onto the first part 10 of the instrument 1, and when initiating action of light he uses his index finger I to depress control element push-button 26 on the segment 22' of the circumferential wall 22 of the second part 20. Control element button 28 on the lower side B of the instrument 1 is not used as the index finger I is the finger that to the dentist will be most natural to use for the purpose; activation of control element 28 instead of control element 26 will, however, yield the same result, be it activation or deactivation of the light source 5.

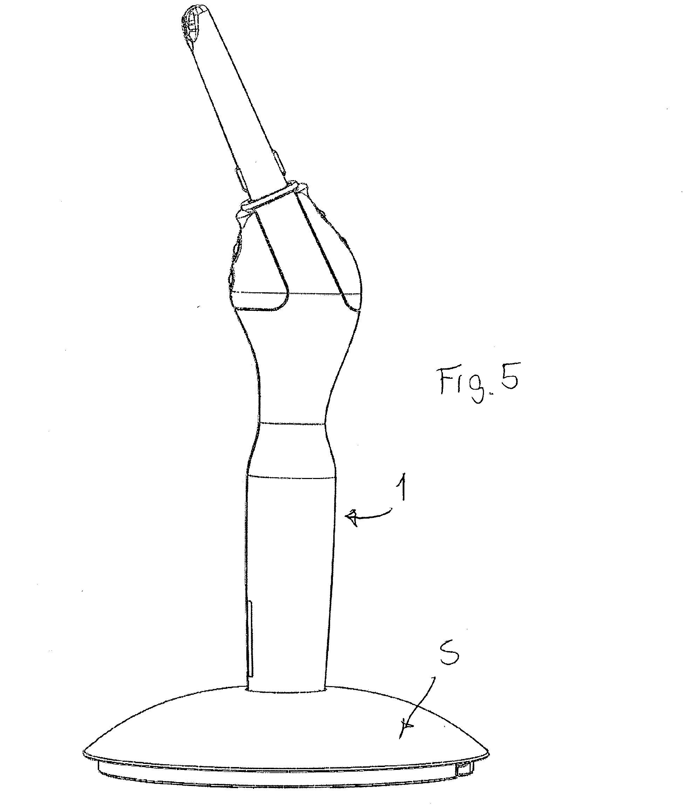

Fig. 4 on the other hand shows another position of use of the instrument 1 where side B shown in fig. 1 faces upwards and with the light guide 40 pointing upwards, for treating teeth in the upper mouth part of a patient, and with the tip portion 9 inserted into the patient's mouth. As shown, the dentist will hold securely onto the first part 10 of the instrument 1, and when initiating action of light source 5 he uses his index finger I to depress control element push-button 28 on the second segment 22" diametrically opposite the aforementioned first segment 22' of the circumferential wall 22. Control element button 26 will not be used in this case; however, any activation of control element 26 instead of control element 28 will yield the same result, be it activation or deactivation of the light source 5. The control elements 26, 28 do not need to be located exactly opposite each other. Fig. 5 shows the instrument 1 seen from the left side and mounted in a charger S, for charging a battery lodged within the housing part 10.

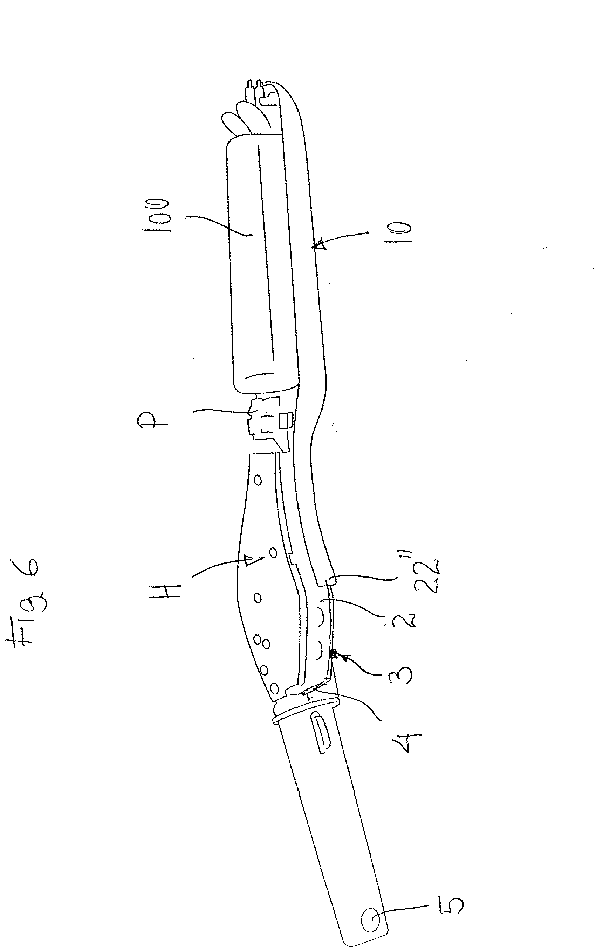

Fig. 6 shows a metal heat-sink H mounted inside the flat second part 20 of the housing and carrying the light source 5 for dissipating heat generated by the light source 5, as well as the rechargeable battery 100 located in the first part 10 of the housing. Arranged below the heat-sink H is an essentially flat printed circuit board 2 which is oriented with its two opposite major surfaces extending in the general direction between the upper side A and the lower side B of the instrument 1, i.e. facing right and left when the instrument 1 is in use as shown in fig. 3 and 4. The board 2 has a peripheral edge 4 with portions that may follow the contour of the opposite segments 22', 22". Along the peripheral edge 4, in two opposite portions facing sides A and B, respectively, are contacts or switches 3 located adjacent the control elements 26, 28; the contacts are activated by the dentist when manipulating the control elements 26, 28. Conveniently, the contacts 3 are mounted directly on the edge 4 of the printed circuit board 2.

Shown in fig. 7 is a cross-sectional view of the tip portion 9 as seen from the end, and showing the cover 50 mounted over the third part 30. Also shown is the optical light guide 40 of a suitable material for guiding light from LED light source 5 towards light guide end 43 from proximal end 42 of the light guide 40. The light guide 40 may be configured to transmit all light to the light guide end 43, or the light guide 40 may be stepped as shown in fig. 4 of US patent application no. 2009/0047618 whereby light also shines out from the light guide 40 along the length thereof, which is desirable in root canal treatment. The light guide 40 is mounted onto the cover 50, such as by snap action, after the dentist has selected the desired light guide 40, depending on the process he is to perform. For this purpose the cover 50 has projecting opposed walls 55', 55" with respective hinge parts 57 engaging, such as by snap-action, respective recesses 47 in the proximal end 42 of the light guide 40. The opposed walls 55', 55" prevent turning movements of the light guide 40 in relation to the cover 50 in a direction to the right and left in fig. 7, i.e. about an axis parallel with the third part 30; however, the hinge parts 57 provide for a limited manual turning or pivotal movement, such as against a frictional resistance, of the light guide 40 in and out of the plane of fig. 7, the light guide 40 maintaining its position when a desired angular position has been reached. This pivotal movement can also be understood by comparing the position of the light guide 40 in fig. 3 with the position shown in fig. 4. Mounting of the light source 50 within the housing may be done in various ways; the light source may, purely by way of example, be mounted on the end of an arm projecting into the third part 30 from the second part 20, such as of a metallic heat sink, as illustrated schematically in US patent application no. 2009/0047618. Fig. 8 is another cross-section view, showing the mounting of the light guide 40 onto the cover 50, before mounting the cover 50 onto the third part of the instrument 1.

Shown in fig. 6 is also a processor P which allows for a simplification of the dentist's work, in particular when curing resin at multiple point in the patient's mouth during a single process where the instrument is moved from one point to another continuously until completion of the process. One such process could be the mounting of braces to the patient's teeth in which mounting resin is cured successively by shining blue light towards each tooth, moving the instrument 1 from one side of the mouth to the other, with no interruption. In such a case the processor P is programmed to after a single manipulation of the first 26 or second 28 control element successively activate and deactivate the light source 5 running at a fixed preset intensity for a period of time during which the light source 5 is on for equal sub-periods of time and during which the light source 5 is off for equal sub-periods of time. The equal sub-periods of activation of said light source 5 may have a preset duration in the range of 8 - 12 seconds, each such sub-period being followed by a sub-period of deactivation of said light source 5 having a preset duration in the range of 0.5 - 2 seconds, the processor being programmed to successively activate said light source 8-14 times after the single operation of the first 26 or second 28 control element, corresponding to a completion of the curing along all teeth.

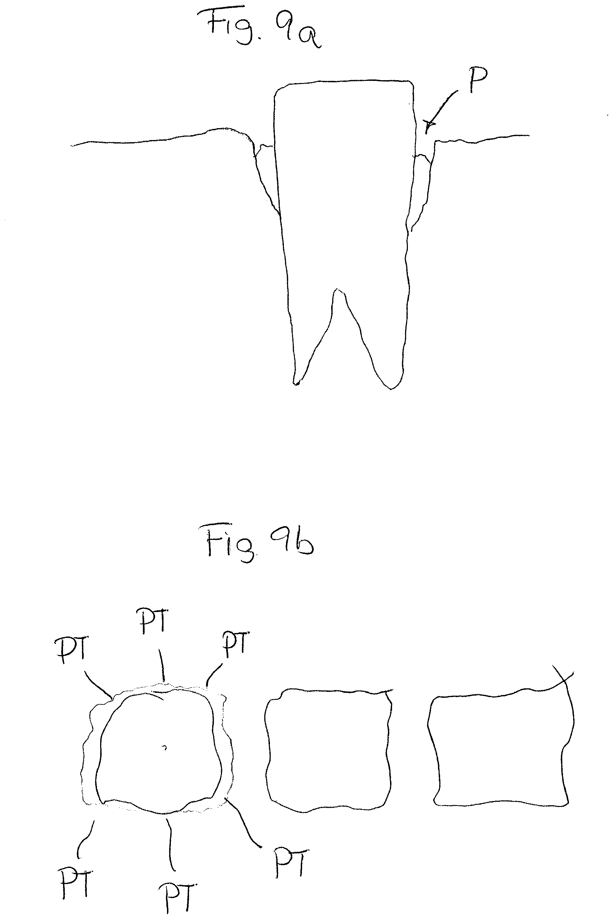

Alternatively, the processor P may be programmed for use in the treatment of periodontal diseases caused by the build-up of bacteria, mucous and microbes surrounding the teeth, as shown in fig. 9a and 9b. In such a case, for the activation of photosynthetic solutions for sterilising periodontal pockets, the optical output of the LED is preferably above 1 W. A suitable LED is type nr. LE-015015R1G manufactured by LedEngin, Inc. This LED consumes approximately 15 W power and emits more than 1 W optical output, typically approximately 2 W (red light, peak frequency of approximately 625-640 nm). During such a treatment the dentist will apply light to a photosynthetic solution filled into the periodontal pocket, using the light guide 40 placed at discrete points P around the perimeter of the tooth for a period of time. Typically, the light guide 40 is inserted at six points PT or locations around the tooth. In such a case the processor P is programmed to after a single manipulation of the first 26 or second 28 control element successively activate and deactivate the light source 5. The duration of each period the light source 5 is switched on may be in the range of 2 - 12 seconds, each such period being followed by a period of deactivation of said light source 5 as the dentist moves the light guide 40 to the next point PT, the processor being programmed to successively activate said light source a number of times corresponding to the number of point PT, typically 4-6 times, after the initial single operation of the first 26 or second 28 control element, corresponding to a completion of the treatment around a tooth.

According to an aspect of the invention a dental instrument (1) is provided comprising:
- a housing having a first part (10) with a circumferential wall (12) and defining a hand-piece for holding, preferably by a single hand, said instrument (1),
- a light source (5),
- electrical components (2) for operating said light source (5) lodged within said housing, and a tip portion (9) configured for insertion into a patient's mouth, said tip portion (9) being configured to support a light guide (40) having a proximal end (42) receiving light from said light source (5),
- said tip portion (9) being configured to support said light guide (40) in a position extending from said instrument (1) on said first side (A); said housing optionally being adapted for releasably securing thereto a substantially rigid disposable cover (50) for covering said third part (30), said third part (30) or said cover (50) being adapted for pivotal connection thereto of said light guide (40) to allow a forced pivotal movement of said light guide projecting on said first side.

According to another aspect of the invention a dental instrument (1) is provided comprising:
- a housing having a first part (10) with a circumferential wall (12) and defining a hand-piece for holding, preferably by a single hand, said instrument (1),
- a light source (5),
- electrical components (2) for operating said light source (5) lodged within said housing, and a tip portion (9) configured for insertion into a patient's mouth, said tip portion (9) being configured to support a light guide (40) having a proximal end (42) receiving light from said light source (5), and
- a processor (P), said processor being programmed to after a single operation of said first (26) or second (28) control element successively activate and deactivate said light source (5) for a preset period of time, during which period of time the light source (5) is activated for equal sub-periods of time and during which period of time the light source (5) is deactivated for equal sub-periods of time. The equal sub-periods of activation of said light source (5) may have a duration in the range of 8 - 12 seconds, the equal sub-periods of deactivation of said light source (5) having a duration in the range of 0.5 - 2 seconds, the processor preferably being programmed to successively activate said light source 4-36 times, preferably 6 - 14 times, after said single operation of said first (26) or second (28) control element.

The term "circumferential" as used in this text is not to be interpreted restrictively as relating to the perimeter of a circle. Instead, the term "circumferential" as used herein relates to the external boundary of objects that have a shape other than that of a circle.

## Claims

1. A dental instrument (1) comprising:
- a housing having a first part (10) with a circumferential wall (12) and defining a hand-piece for holding, preferably by a single hand, said instrument (1),
- a light source (5), such as a LED light source,
- electrical components (2) for operating said light source (5) being lodged within said housing, and
- a tip portion (9) configured to support a light guide (40) having a proximal end (42) receiving light from said light source (5),
- **characterised in** said housing having between said first part (10) and said tip portion (9) a second part (20) with a circumferential wall (22) having on a first side (A) of said instrument (1) a first control element (26) for fingertip operation and on a second side (B) of said instrument (1) a second control element (28) for fingertip operation, said first control element (26) being located opposite said second control element (28).

2. The dental instrument according to claim 1, said tip portion (9) being configured to support said light guide (40) in a position extending from said first (A) or second (B) side of said instrument (1), said first (A) and second (B) sides facing upwards or downwards, respectively, in use of the instrument (1).

3. The dental instrument according to claim 1 or 2, said first (26) and second (28) control elements having at least one common control function for said light source (5).

4. The dental instrument according to claim 3, said common function being related to the switching on and/or off of said light source (5).

5. The dental instrument according to claim 3 or 4, said common function being related to the controlling of the light intensity of said light source (5).

6. The dental instrument according to any of the preceding claims, said housing including a third part (30) extending from said second part and defining at a distal end thereof said tip portion (9), said light source (5) being lodged at said distal end.

7. The dental instrument according to any of the preceding claims, said third part (30) being tubular, or essentially tubular.

8. The dental instrument according to any of the preceding claims, said housing being adapted for releasably securing thereto a substantially rigid disposable cover (50) for covering said third part (30).

9. The dental instrument according to any of the preceding claims, said third part (30) or said cover (50) being adapted for pivotal connection thereto of said light guide (40).

10. The dental instrument according to any of the preceding claims, said first (26) and second (28) control elements being located for manipulation by the same finger, such as the thumb or index finger, irrespectively of said instrument (1) being oriented for treatment of teeth (70) in the upper mouth or for treatment of teeth (60) in the lower mouth.

11. The dental instrument according to any of the preceding claims, said second part (20) of said housing having a flat, or relatively flat, configuration, said electrical components (2) including a printed circuit board (2) having opposite major surfaces and a peripheral edge (4), said printed circuit board (2) being arranged inside said second part (20) with said major surfaces extending between said first side (A) and said second side (B) of said instrument (1), said printed circuit board (2) preferably having contacts (3) mounted opposite each other on said peripheral edge (4) and being directly activatable by said first (26) and second (28) control elements, respectively.

12. The dental instrument according to any of the preceding claims, including a processor (P), said processor being programmed to after a single operation of said first (26) or second (28) control element successively activate and deactivate said light source (5) for a period of time, during which period of time the light source (5) is activated for equal sub-periods of time and during which period of time the light source (5) is deactivated for equal sub-period of time, each sub-period of activation being followed by a sub-period of deactivation.

13. The dental instrument according to the preceding claim, wherein said equal sub-periods of activation of said light source (5) have a duration in the range of 2-12 seconds, and wherein said equal sub-periods of deactivation of said light source (5) have a duration in the range of 0.5 - 2 seconds, said processor being programmed to successively activate said light source 4 - 36 times, preferably 6 - 14 times, after said single operation of said first (26) or second (28) control element.

14. The dental instrument according to claim 13, for the treatment of periodontal pockets, wherein said equal sub-periods of activation of said light source (5) have a duration in the range of 2-10 seconds, and wherein said equal sub-periods of deactivation of said light source (5) have a duration in the range of 0.5 - 2 seconds, said processor being programmed to successively activate said light source 4 - 8 times, after said single operation of said first (26) or second (28) control element.

15. A dental hand piece including the dental instrument (1) according to any of the preceding claims, a tubular light guide (40) for emitting light onto a patient's teeth being hinged to said tip portion on said first (A) or second (B) side, said hinge being configured to allow a forced pivotal movement of said light guide (4) projecting on said first or second side.
